# EUROPÄISCHE PATENTSCHRIFT

(11) **EP 3 283 240 B1**
(45) Veröffentlichungstag und Bekanntmachung des Hinweises auf die Patenterteilung: **22.05.2019**
(21) Anmeldenummer: 16724267.6
(22) Anmeldetag: 13.04.2016
(51) Int. Cl.: B21D 5/00, B21D 5/04

(54) **AUFLAGETISCH FÜR BIEGEMASCHINE**
SUPPORTING TABLE FOR BENDING MACHINE
PLATEAU DE RÉCEPTION POUR MACHINE DE CINTRAGE

(30) Priorität: 13.04.2015 AT 502902015
(43) Veröffentlichungstag der Anmeldung: 21.02.2018
(73) Patentinhaber: TRUMPF Maschinen Austria GmbH & Co. KG., 4061 Pasching (AT)
(72) Erfinder: AIGNER, Wolfgang, 4642 Sattledt (AT); SPEZIALI, Stefano, 06034 Foligno (PG) (IT); WEISS, Thomas, 4020 Linz (AT)
(74) Vertreter: Burger, Hannes
(86) Internationale Anmeldenummer: PCT/AT2016/050092
(87) Internationale Veröffentlichungsnummer: WO 2016/164948

(56) Entgegenhaltungen:
- WO-A1-2013/093950
- DE-A1- 19 621 658
- DE-A1-102006 047 109
- US-A- 5 630 336
- US-A- 5 761 951

## Beschreibung

Die Erfindung betrifft eine Biegemaschine für Bleche mit einer Auflagevorrichtung zur Aufnahme des zu biegenden Bleches.

Aus der DE 10 2006 047 109 A1 ist eine Biegemaschine für Bleche bekannt, welche einen Auflagetisch mit parallel zur Biegekante verstellbaren Auflageelementen aufweist.

Der vorliegenden Erfindung liegt die Aufgabe zugrunde, eine Biegemaschine zu schaffen, welche möglichst variabel bereits vorgeformte bzw. gebogene Bleche bearbeiten kann, bzw. welche verschiedenste Biegungen an einem Blech herstellen kann.

Diese Aufgabe der Erfindung wird durch die Biegemaschine gemäß Anspruch 1 gelöst.

Erfindungsgemäß ist eine Biegemaschine für Bleche, insbesondere Schwenkbiegemaschine, ausgebildet. Die Biegemaschine umfasst:
ein Maschinengestell;
eine Klemmunterlage, welche am Maschinengestell angeordnet ist, wobei an der Klemmunterlage eine Auflagefläche ausgebildet ist an welcher das zu biegende Blech für die Bearbeitung auflegbar ist;
einen Niederhalter, welcher vertikal verschiebbar am Maschinengestell angeordnet ist und durch welchen in Zusammenwirkung mit der Klemmunterlage das auf der Klemmunterlage platziere Blech fixierbar ist und welcher Niederhalter an der Vorderseite eine sich in Längsrichtung der Biegemaschine erstreckende Niederhalterkante aufweist;
ein Biegewerkzeug, welches an einer Vorderseite der Klemmunterlage und des Niederhalters angeordnet ist und durch welches ein zwischen Klemmunterlage und Niederhalter geklemmtes Blech verformbar ist;
eine Auflagevorrichtung, welche zur Aufnahme des zu biegenden Bleches ausgebildet ist, wobei eine Auflagefläche der Auflagevorrichtung in einer horizontalen Ebene mit der Auflagefläche der Klemmunterlage angeordnet ist. Die Auflagevorrichtung umfasst zumindest ein erstes und ein zweites Auflagemodul mit einer ersten und einer zweiten Auflagefläche aufweist, wobei zumindest eines der Auflagemodule horizontal in Längsrichtung der Biegemaschine verschiebbar ist und dadurch ein im rechten Winkel zur Niederhalterkante verlaufender Spalt zwischen den beiden Auflagemodulen einstellbar ist, und dass die Auflagemodule jeweils zumindest einen erstes und ein zweites Auflageelement mit einem zwischen den Auflageelement liegenden zweiten Spalt aufweisen, welcher zweite Spalt parallel zur Niederhalterkante ausgerichtet ist, wobei zumindest eines der Auflageelemente verschiebbar ist, sodass der zweite Spalt in dessen Größe und/oder Lage verstellbar ist.

Von Vorteil an der erfindungsgemäßen Ausbildung ist, dass durch den im rechten Winkel zur Niederhalterkante verlaufenden ersten Spalt bzw. durch den parallel zur Niederhalterkante verlaufenden zweiten Spalt, welche an der Auflagevorrichtung ausgebildet sind und welche variabel verstellbar sind, auch Bleche an der Auflagevorrichtung aufgelegt werden können, welche bereits vorhandene Biegungen aufweisen und somit im Bereich der Auflagevorrichtung nicht eben sind. Dadurch wird die Biegemaschine flexibler, sodass insgesamt eine größere Anzahl von verschieden gestalteten Blechen hergestellt werden kann.

Weiters kann es zweckmäßig sein, dass zumindest eines der beiden Auflageelemente jeweils zusammenhängende und am Auflagemodul geführte Segmente umfasst. Von Vorteil ist hierbei, dass segmentierte Auflageelemente nach Bedarf in deren Position verschoben werden können bzw. dass diese teilweise aus dem Bereich der Auflageebene entfernt werden können und dabei platzsparend innerhalb des Auflagemoduls angeordnet werden können.

Ferner kann vorgesehen sein, dass je Auflagemodul zumindest ein Aktor, vorzugsweise elektromotorischer Antrieb, angeordnet ist, mittels welchem zumindest eines der an einem Auflagemodul angeordneten Auflageelemente verstellbar ist. Von Vorteil ist hierbei, dass zumindest eines der Auflageelemente verstellbar ist und somit die Größe des zweiten Spaltes variabel einstellbar ist.

In einer Weiterbildung kann vorgesehen sein, dass je Auflagemodul zwei Aktoren, vorzugsweise elektromotorische Antriebe, angeordnet sind, mittels welchen das erste und das zweite Auflageelement unabhängig voneinander verstellbar sind. Von Vorteil ist hierbei, dass dadurch nicht nur die Größe des zweiten Spaltes variabel einstellbar ist sondern dass auch die Lage des zweiten Spaltes variiert werden kann. Die einzelnen Auflagemodule können somit vollautomatisch an die Erfordernisse zur Bearbeitung von verschiedenen Blechen angepasst werden.

Vorteilhaft ist auch eine Ausprägung, gemäß welcher vorgesehen sein kann, dass die Auflageelemente, insbesondere die einzelnen Segmente, auf einer Speicherrolle aufrollbar sind. Dadurch kann erreicht werden, dass die Auflageelemente, wenn diese aus dem Auflagebereich verschoben werden und somit der zweite Spalt vergrößert wird, platzsparend in der Auflagevorrichtung verschoben werden können. Durch das Aufrollen der einzelnen Segmente auf eine Speicherrolle können diese ähnlich einem Rolltor möglichst platzsparend auf der Speicherrolle angeordnet werden.

Gemäß einer Weiterbildung ist es möglich, dass die Speicherrolle mittels einem Riementrieb mit einer Antriebseinheit gekoppelt ist. Von Vorteil ist hierbei, dass durch den Riementrieb die Antriebseinheit von der Speicherrolle beabstandet angeordnet sein kann und somit die Antriebseinheit in einem Bereich der Auflagevorrichtung angeordnet sein kann, in welchem sie die Funktionalität der Auflagevorrichtung nicht negativ beeinflusst, sodass durch die Antriebseinheit der für die Auflage des Bleches benötigte Platz nicht beschränkt wird.

Ferner kann es zweckmäßig sein, dass die Speicherrollen von zumindest zwei der Auflagemodule drehbewegungsgekoppelt sind, wobei die Drehbewegung mittels einer sich in Längsrichtung erstreckenden Antriebswelle mit polygonem Querschnitt übertragen wird und wobei die Antriebswelle mittels einem Drehantrieb angetrieben wird und wobei die Speicherrollen in Längsrichtung der Antriebswelle verschiebbar sind. Von Vorteil ist hierbei, dass an der Biegemaschine eine Antriebswelle mit polygonem Querschnitt angeordnet sein kann, welche von einer Antriebseinheit angetrieben wird. Die einzelnen Auflagemodule können hierbei in Längsrichtung verschieblich an der Biegemaschine angeordnet sein, wobei die Speicherrollen einen polygonen Innenquerschnitt aufweisen, welcher mit dem polygonen Querschnitt der Antriebswelle korrespondiert. Dadurch kann eine momentenübertragende Verbindung zwischen den Speicherrollen und der Antriebswelle ausgeführt werden, wobei eine Längsverschieblichkeit zwischen Antriebswelle und den Speicherrollen gegeben ist.

Darüber hinaus kann vorgesehen sein, dass die Auflagemodule mittels einem Manipulator in Längsrichtung der Biegemaschine verschiebbar sind, wobei der Manipulator ein Kupplungselement zum bedarfsweisen koppeln mit den Auflagemodulen aufweist. Von Vorteil ist hierbei, dass dadurch der erste Spalt in dessen Größe und/oder in dessen Position automatisiert verstellt werden kann und somit die Biegemaschine an die Bearbeitung von verschiedenst ausgeführten Blechen angepasst werden kann.

Weiters kann vorgesehen sein, dass der Manipulator einen Manipulatorarm umfasst, welcher derart ausgebildet ist, dass der Manipulator verschiedene Auflagemodule erreichen kann. Von Vorteil ist hierbei, dass ein Manipulator, welcher zur Handhabung von Blechwerkstücken eingesetzt wird, zusätzlich auch zur Positionierung der einzelnen Module eingesetzt werden kann.

Gemäß einer besonderen Ausprägung ist es möglich, dass der Manipulator ein Zugmittel mit einem Mitnehmerelement umfasst. Von Vorteil ist hierbei, dass ein derart ausgebildeter Manipulator möglichst einfach aufgebaut sein kann und sich über die gesamte Breite der Biegemaschine erstrecken kann, sodass sämtliche Auflagemodule der Auflagevorrichtung mittels dem Manipulator verschoben werden können.

In einer Alternativvariante kann vorgesehen sein, dass jedes der Auflagemodule einen eigenen Stellantrieb aufweist und durch diesen in Längsrichtung der Biegemaschine verschiebbar ist. Von Vorteil ist hierbei, dass die Auflagemodule zur gleichen Zeit und unabhängig voneinander verschoben werden können und somit die Auflagevorrichtung innerhalb sehr kurzer Zeit für die Auflage von verschiedenartig ausgebildeten Blechen vorbereitet werden kann. Somit kann die Rüstzeit verkürzt und dadurch die Auslastung der Biegemaschine erhöht werden.

Entsprechend einer vorteilhaften Weiterbildung kann vorgesehen sein, dass je Auflagemodul eine Feststellbremse ausgebildet ist, mittels welchem das Auflagemodul in seiner Position fixierbar ist. Von Vorteil ist hierbei, dass dadurch die einzelnen Auflagemodule in ihrer Position fixiert werden können und dadurch ein unerwünschtes verschieben der Auflagemodule unterbunden werden kann.

Insbesondere kann es vorteilhaft sein, dass die einzelnen Segmente der Auflageelemente durch ein elastisches Koppelelement miteinander gekoppelt sind. Dadurch kann erreicht werden, dass die einzelnen Segmente der Auflageelemente flexibel miteinander verbunden sind.

Schließlich kann vorgesehen sein, dass die einzelnen Segmente der Auflageelemente jeweils eine Rollenführung aufweisen durch welche sie in einem Auflagemodul geführt sind. Von Vorteil ist hierbei, dass die einzelnen Segmente der Auflageelemente somit leichtgängig in einem Auflagemodul geführt werden können, wobei eine derartige Rollenführung mit nur geringem Verschleiß behaftet ist.

Zum besseren Verständnis der Erfindung wird diese anhand der nachfolgenden Figuren näher erläutert.

Es zeigen jeweils in stark vereinfachter, schematischer Darstellung:
- Fig. 1: eine Seitenansicht einer Biegemaschine mit einer Auflagevorrichtung;
- Fig. 2: eine Draufsicht der Biegemaschine mit der Auflagevorrichtung;
- Fig. 3: eine Schnittdarstellung der Auflagevorrichtung, insbesondere gemäß der Schnittlinie III-III aus Fig. 1;
- Fig. 4: eine Schnittdarstellung der Auflagevorrichtung im Bereich der Speicherrolle, insbesondere gemäß der Schnittlinie IV-IV aus Fig. 2;
- Fig. 5: eine Schnittdarstellung eines weiteren Ausführungsbeispiels der Auflagevorrichtung mit Riemenantrieb;
- Fig. 6: eine Schnittdarstellung eines weiteren Ausführungsbeispiels der Auflagevorrichtung mit Direktantrieb;
- Fig. 7: eine Schnittdarstellung eines weiteren Ausführungsbeispiels der Auflagevorrichtung mit Nabenmotor;
- Fig. 8: eine Seitenansicht eines weiteren Ausführungsbeispiels der Auflagevorrichtung mit Riementrieb für die Auflagemodule;
- Fig. 9: eine Seitenansicht eines weiteren Ausführungsbeispiels der Auflagevorrichtung mit Zahnstange für die Auflagemodule;
- Fig. 10: eine Seitenansicht eines weiteren Ausführungsbeispiels der Auflagevorrichtung mit Direktantrieb für die Auflagemodule;
- Fig. 11: eine Seitenansicht eines weiteren Ausführungsbeispiels der Auflagevorrichtung mit elastischer Kopplung der Segmente.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

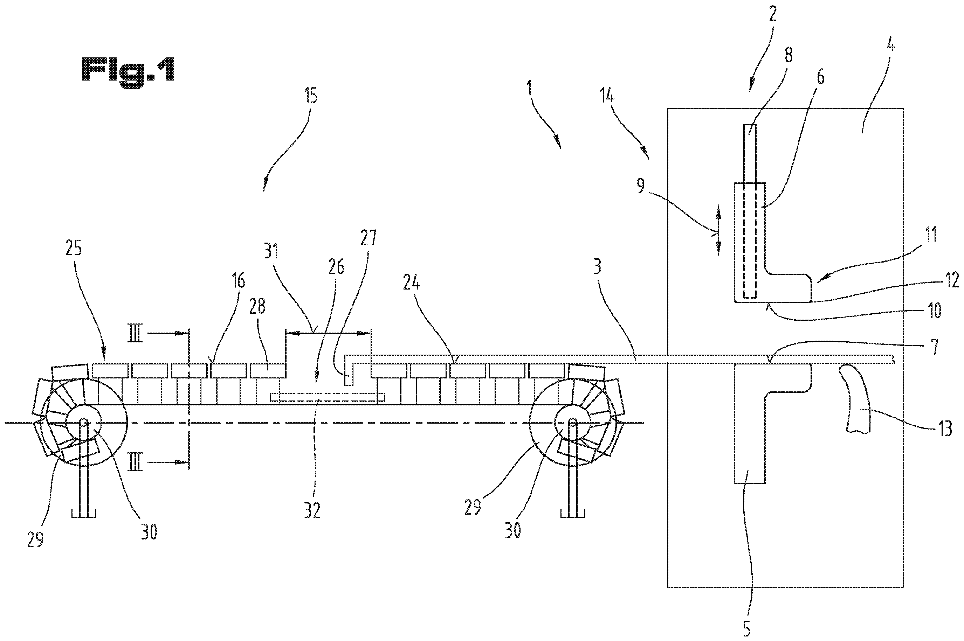

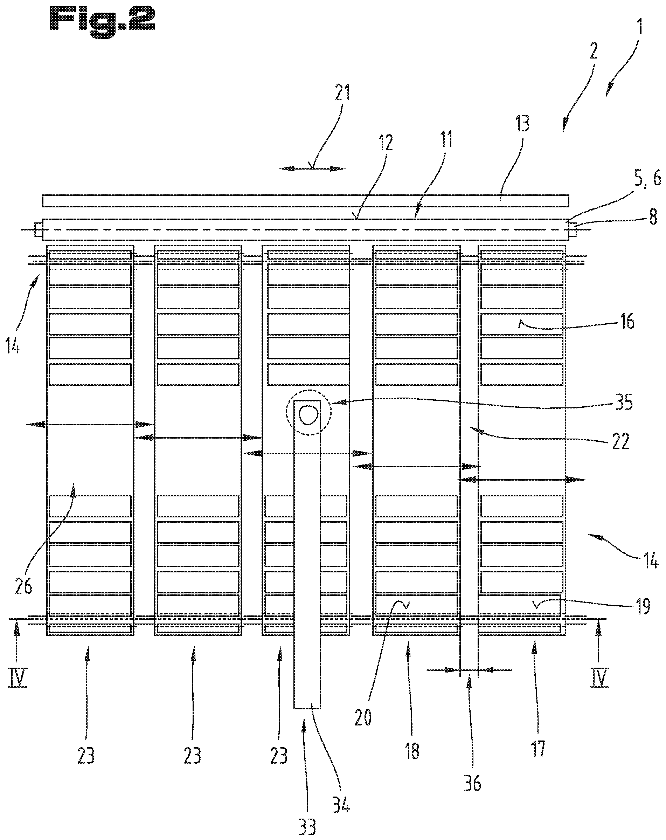

Fig. 1 zeigt in einer schematischen Darstellung eine Seitenansicht einer Biegemaschine 1. Fig. 2 zeigt in schematischer Darstellung die Draufsicht auf die Biegemaschine 1. Der Aufbau der Biegemaschine 1 wird in den folgenden Absätzen anhand einer Zusammenschau der Fig. 1 und 2 beschrieben.

Wie aus den Fig. 1 und 2 gut ersichtlich, ist die Biegemaschine 1 als Schwenkbiegemaschine 2 ausgebildet, welche zum Biegen von Blechen 3 dient. Die Biegemaschine 1 umfasst ein Maschinengestell 4, an welchem eine Klemmunterlage 5 und ein Niederhalter 6 angeordnet sind. Die Klemmunterlage 5 kann starr, also nicht beweglich, mit dem Maschinengestell 4 verbunden sein und dient als Auflage für das Blech 3. Insbesondere ist an der Klemmunterlage 5 eine Auflagefläche 7 ausgebildet, an welcher das Blech 3 aufliegen kann.

Der Niederhalter 6 kann durch ein Führungsschienensystem 8 in einer Vertikalrichtung 9 verschiebbar am Maschinengestell 4 angeordnet sein. An dessen Unterseite kann der Niederhalter 6 eine Niederhalterfläche 10 aufweisen, welche zur Kontaktierung des Bleches 3 vorgesehen ist.

An der Vorderseite 11 des Niederhalters 6 ist eine Niederhalterkante 12 ausgebildet, welche beim Werkstück als Biegekante dienen kann. Die Niederhalterfläche 10 wird an der Vorderseite 11 des Niederhalters 6 durch die Niederhalterkante 12 begrenzt.

Zur Durchführung eines Biegevorganges wird das zu biegende Blech 3 zwischen der Klemmunterlage 5 und dem Niederhalter 6 geklemmt. An der Vorderseite 11 des Niederhalters 6 ist ein Biegewerkzeug 13 angeordnet mittels welchem das geklemmte Blech 3 gebogen werden kann.

An der Rückseite 14 des Niederhalters 6 bzw. der Klemmunterlage 5 ist eine Auflagevorrichtung 15 ausgebildet, welche zur unterstützenden Aufnahme des Bleches 3 dient. Die Auflagevorrichtung 15 weist eine Auflagefläche 16 auf, an welcher das zu biegende Blech 3 aufliegt bzw. aufgenommen werden kann. Die Auflagefläche 16 der Auflagevorrichtung 15 ist vorzugsweise in einer Ebene mit der Auflagefläche 7 der Klemmunterlage 5 ausgerichtet, sodass ein auf die Klemmunterlage 5 und die Auflagevorrichtung 15 aufgelegtes Blech 3 waagrecht auf diesen aufliegt.

Die Auflagevorrichtung 15 umfasst ein erstes Auflagemodul 17 und ein zweites Auflagemodul 18, welche eine erste Auflagefläche 19 und eine zweite Auflagefläche 20 ausbilden. Die Auflagefläche 16 der Auflagevorrichtung 15 wird somit insbesondere durch die erste Auflagefläche 19 bzw. die zweite Auflagefläche 20 gebildet. Mit anderen Worten ausgedrückt sind die erste Auflagefläche 19 bzw. die zweite Auflagefläche 20 ein Teil der Auflagefläche 16.

Zumindest eines der beiden Auflagemodule 17, 18 ist horizontal in Längsrichtung 21 der Biegemaschine 1 verschiebbar. Die Längsrichtung 21 der Biegemaschine 1 ist parallel zur Niederhalterkante 12 ausgerichtet.

Durch das erste Auflagemodul 17 bzw. das zweite Auflagemodul 18, insbesondere durch deren begrenzter erster Auflagefläche 19 bzw. zweiter Auflagefläche 20, wird ein erster Spalt 22 gebildet, welcher sich zwischen ersten Auflagemodul 17 und zweiten Auflagemodul 18 befindet. Der erste Spalt 22 ist im rechten Winkel zur Niederhalterkante 12 angeordnet.

Neben dem ersten Auflagemodul 17 bzw. dem zweiten Auflagemodul 18 kann vorgesehen sein, dass ein weiteres Auflagemodul 23 ausgebildet ist, welches ebenso wie das erste bzw. zweite Auflagemodul 17, 18 aufgebaut ist. Darüber hinaus können an der Auflagevorrichtung 15 mehrere weitere Auflagemodule 23 angeordnet sein.

Weiters kann vorgesehen sein, dass zumindest eines der Auflagemodule 17, 18, 23 ein erstes Auflageelement 24 und ein zweites Auflageelement 25 aufweisen, durch welches insbesondere die Auflageflächen 19, 20 ausgebildet sind. Zwischen den beiden Auflageelementen 24, 25 ergibt sich ein zweiter Spalt 26, welcher parallel zur Niederhalterkante 12 ausgerichtet ist. Der zweite Spalt 26 ist durch Verschiebung des ersten Auflageelementes 24 und/oder durch Verschiebung des zweiten Auflageelementes 25 in dessen Position bzw. in dessen Größe variierbar.

Durch die beschriebene Ausgestaltung der Auflagemodule 17, 18, 23 kann erreicht werden, dass Bleche 3, welche eine vorgebogene Lasche 27 aufweisen, eben auf der Auflagevorrichtung 15 aufgelegt werden können. Dies wird insbesondere dadurch erreicht, dass die Lasche 27 im zweiten Spalt 26 aufgenommen werden kann.

Weiters kann durch die Ausgestaltung der Auflagevorrichtung 15 mit verschiebbaren Auflagemodulen 17, 18, 23 erreicht werden, dass eine Lasche 27 ebenfalls im ersten Spalt 22 zwischen den einzelnen Auflagemodulen 17, 18, 23 aufgenommen werden kann.

Die Lasche 27 kann durch die höchst variable Ausgestaltung der Biegemaschine 1 entweder zur Biegekante des zu biegenden Blechabschnittes parallel verlaufend, im rechten Winkel dazu, oder in einem weiteren Winkel dazu angeordnet sein.

Wie aus den Fig. 1 und 2 ersichtlich, kann vorgesehen sein, dass die beiden Auflageelemente 24, 25 durch einzelne Segmente 28 gebildet sind. Die einzelnen Segmente 28 können hierbei ähnlich einem Rolltor auf einer Speicherrolle 29 aufgerollt sein und somit platzsparend verschoben werden.

Weiters kann vorgesehen sein, dass je Auflagemodul 17, 18, 23 ein Aktor 30 vorgesehen ist, mittels welchem zumindest eines der an einem Auflagemodul 17, 18, 23 angeordneten Auflageelemente 24, 25 verstellbar ist. Der Aktor 30 kann als Drehantrieb, etwa als elektromotorischer Drehantrieb, wie etwa Servomotor, ausgebildet sein. Durch den Aktor 30 kann erreicht werden, dass der zweite Spalt 26 zumindest in dessen Größe oder in dessen Position verstellt werden kann. Somit kann eine Spaltweite 31 des zweiten Spaltes 26 reguliert werden.

In einer ersten Ausführungsvariante kann vorgesehen sein, dass je Auflagemodul 17, 18, 23 zwei Aktoren 30 angeordnet sind, mittels welchen das erste 24 und das zweite Auflageelement 25 unabhängig voneinander verstellbar sind. Dadurch kann die Position bzw. die Spaltweite 31 des zweiten Spaltes 26 frei variiert werden.

In einer weiteren Ausführungsvariante kann vorgesehen sein, dass das erste Auflageelement 24 und das zweite Auflageelement 25 durch ein Verbindungselement 32 miteinander gekoppelt sind und somit durch einen gemeinsamen Aktor 30 verstellbar sind. Hierbei ist die Spaltweite 31 im Vorhinein einstellbar und während dem automatischen Betrieb der Auflagevorrichtung 15 kann mittels dem einen Aktor 30 nur die Position des zweiten Spaltes 26 variiert werden und die Spaltweite 31 bleibt konstant.

In wieder einer anderen Alternativvariante kann vorgesehen sein, dass die Auflageelemente 24, 25 nicht durch einen Aktor 30 verstellbar sind, sondern dass diese manuell verstellbar sind.

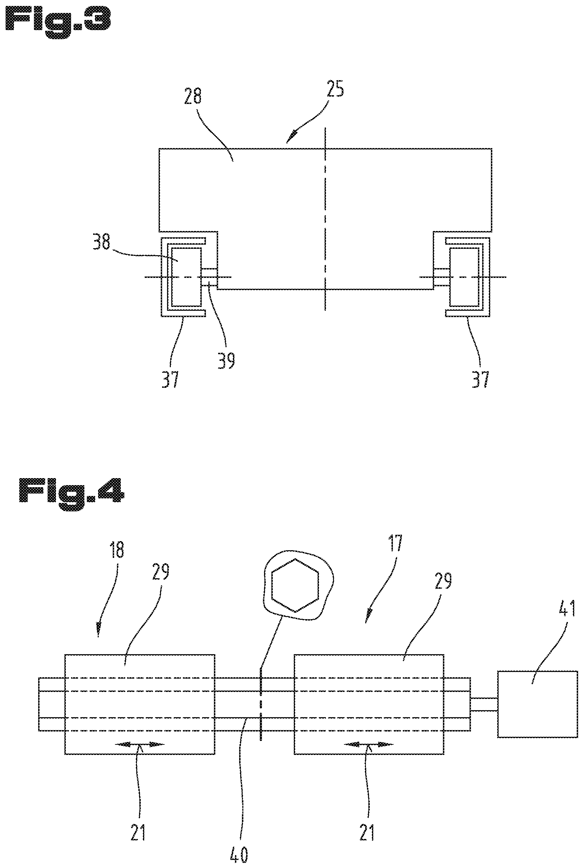

Der Aktor 30 kann durch verschiedene Anbindungsmöglichkeiten mit der Speicherrolle 29 drehmomentgekoppelt sein. Verschiedene Anbindungsmöglichkeiten hierzu werden in weiterer Folge in den einzelnen Figuren 3 bis 7 noch genauer beschrieben.

Zum Verschieben der einzelnen Auflagemodule 17, 28, 23 in Längsrichtung 21 kann ein Manipulator 33 vorgesehen sein, welcher von der Maschinensteuerung angesteuert werden kann. Der Manipulator 33 kann einen Manipulatorarm 34 aufweisen, an welchem ein Kupplungselement 35 ausgebildet sein kann, welches zum Kuppeln des Manipulatorarmes 34 mit den einzelnen Auflagemodulen 17, 18, 23 dient. Durch den Manipulator 33 kann die Spaltweite 36 des ersten Spaltes 22 eingestellt werden.

Weiters kann vorgesehen sein, dass der Manipulatorarm 34 zur Manipulation von Blechen 3 ausgebildet ist. In einer weiteren Alternativvariante kann vorgesehen sein, dass durch den Manipulatorarm 34 die Auflageelemente 24, 25 verstellbar sind und somit der zweite Spalt 26 bzw. die zweite Spaltweite 31 verstellbar ist.

In der Fig. 3 ist eine weitere und gegebenenfalls für sich eigenständige Ausführungsform der Biegemaschine 1 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Fig. 3 zeigt in einer schematischen Darstellung einen exemplarischen Schnitt durch ein Auflagemodul 17, 18, 23 entsprechend der Schnittlinie III - III nach Fig. 1.

In dem Ausführungsbeispiel in Fig. 3 ist ersichtlich, dass vorgesehen sein kann, dass die einzelnen Auflageelemente 25 bzw. analog dazu auch die Auflageelemente 24 in einer Führungsschiene 37 geführt sein können und dadurch verschiebbar sein können. Beispielsweise kann vorgesehen sein, dass die einzelnen Segmente 28 jeweils ein Führungsrollensystem 38 aufweisen mittels welchem diese in der Führungsschiene 37 geführt bzw. gelagert sind. Das Führungsrollensystem 38 kann beispielsweise durch eine Laufrolle mit innenliegender Lagerung gebildet sein, welche mittels einem Achszapfen 39 mit dem Segment 28 verbunden sind. Vorzugsweise sind zwei Führungsschienen 37 derart zueinander positioniert, dass diese dem dadurch geführten Auflageelement 25 auch seitlichen Halt geben.

Alternativ zu der Ausführungsvariante mit Führungsrollensystem 38 kann vorgesehen sein, dass eine Gleitführung ausgebildet ist, wobei ein Gleitelement in die Führungsschiene 37 eingreifen kann. Das Gleitelement kann beispielsweise als Gleitblock ausgeführt sein, welcher in der Führungsschiene 37 aufgenommen ist.

In der Fig. 4 ist eine weitere und gegebenenfalls für sich eigenständige Ausführungsform der Biegemaschine 1 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Fig. 4 zeigt eine Schnittdarstellung entsprechend der Schnittlinie IV - IV nach Fig. 2, wobei der Schnitt durch das Zentrum der Speicherrollen 29 verläuft. In der Darstellung nach Fig. 4 ist die Antriebssituation der Speicherrollen 29 sichtbar.

In dem Ausführungsbeispiel nach Fig. 4 ist eine Antriebswelle 40 ausgebildet, welche durch das Zentrum der Speicherrollen 29 verläuft und die Speicherrollen 29 mit der Antriebswelle 40 drehmomentgekoppelt sind. Die drehmomentgekoppelte Ausführung kann dadurch erreicht werden, dass beispielsweise die Antriebswelle 40 eine polygone Außenkontur aufweist und die Speicherrollen 29 eine mit dieser Außenkontur korrespondierende polygone Innenkontur aufweisen. Durch dieses polygone Mitnehmerprofil kann erreicht werden, dass die Speicherrollen 29 einzeln in Längsrichtung 21 relativ zur Antriebswelle 40 verschiebbar sind. Die Antriebswelle 40 kann mit einem Drehantrieb 41 gekoppelt sein, welcher seitlich der Auflagemodule 17, 18 angeordnet sein kann und zum gemeinsamen Antrieb der einzelnen Speicherrollen 29 der Auflagemodule 17, 18 dienen kann.

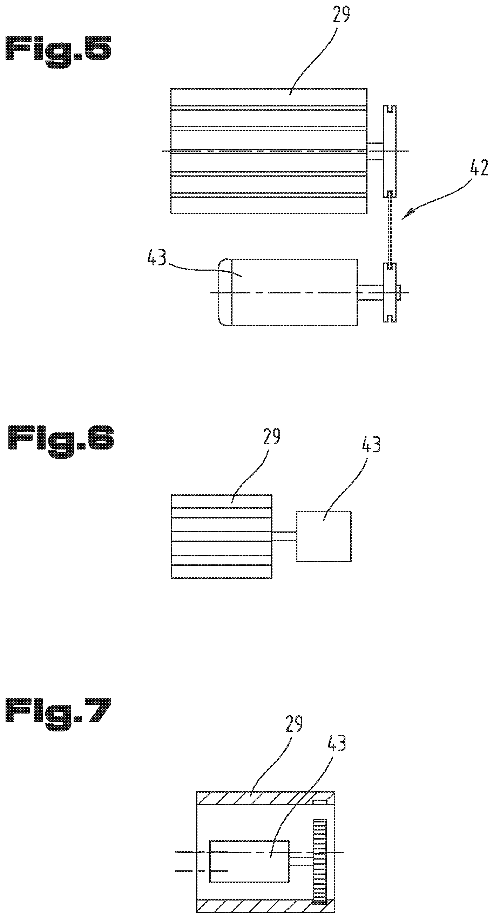

In den Figuren 5, 6 und 7 sind weitere und gegebenenfalls für sich eigenständige Ausführungsformen der Biegemaschine 1 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Fig. 5 zeigt ein weiteres Ausführungsbeispiel des möglichen Antriebes einer Speicherrolle 29, wobei in dieser Figur ersichtlich ist, dass vorgesehen sein kann, dass ein Riementrieb 42 ausgebildet ist, welcher von einer Antriebseinheit 43 angetrieben wird. Hierbei kann vorgesehen sein, dass je Speicherrolle 29 eine Antriebseinheit 43 vorgesehen ist, welche diese antreibt. In einer Alternativvariante kann auch vorgesehen sein, dass eine Antriebseinheit 43 zum Antrieb von mehreren Speicherrollen 29 ausgebildet ist.

Fig. 6 zeigt ein weiteres Ausführungsbeispiel einer Möglichkeit der Ankupplung einer Speicherrolle 29 an eine Antriebseinheit 43, wobei in diesem Ausführungsbeispiel die Antriebseinheit 43 direkt über eine Wellenverbindung mit der Speicherrolle 29 verbunden ist.

Fig. 7 zeigt ein weiteres mögliches Ausführungsbeispiel der Anordnung der Antriebseinheit 43 zur Speicherrolle 29. Die Speicherrolle 29 ist hierbei als Hohlkörper ausgebildet und die Antriebseinheit 43 ist ähnlich einem Radnabenmotor innerhalb dieses Hohlkörpers angeordnet. Über eine Innenverzahnung in der Speicherrolle 29 bzw. über ein entsprechend mit der Antriebseinheit 43 verbundenes Zahnrad wird das Drehmoment von der Antriebseinheit 43 somit auf die Speicherrolle 29 übertragen.

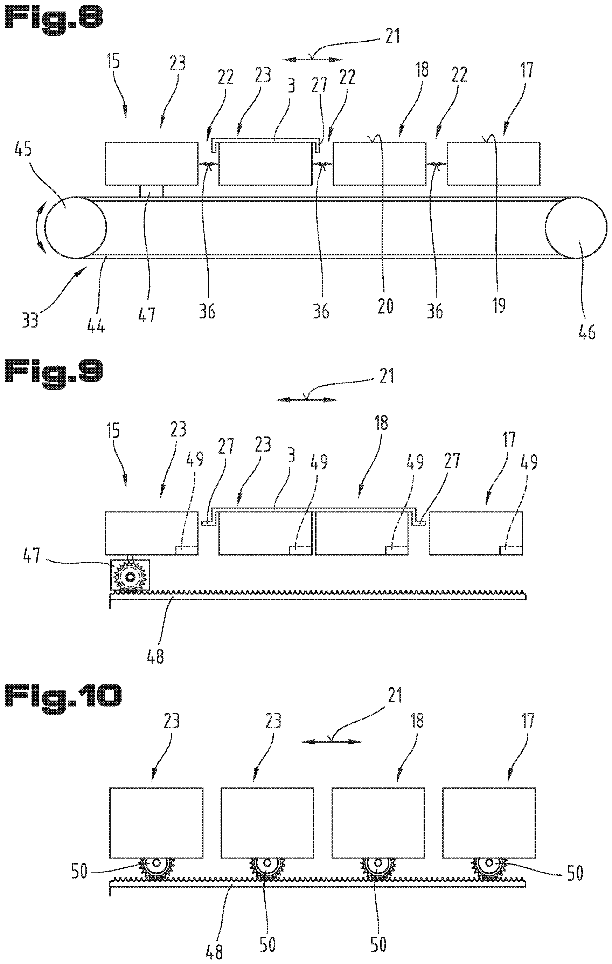

In der Fig. 8 ist eine weitere und gegebenenfalls für sich eigenständige Ausführungsform der Biegemaschine 1 gezeigt, wobei wiederum für gleiche Teile gleiche Bezugszeichen bzw. Bauteilbezeichnungen wie in den vorangegangenen Figuren 1 bis 7 verwendet werden. Um unnötige Wiederholungen zu vermeiden, wird auf die detaillierte Beschreibung in den vorangegangenen Figuren 1 bis 7 hingewiesen bzw. Bezug genommen.

Fig. 8 zeigt in schematischer Darstellung eine Schnittansicht der Auflagevorrichtung 15, insbesondere gemäß der Schnittlinie IV - IV aus Fig. 2. In Fig. 8 sind die einzelnen Module 17, 18, 23 dargestellt, wobei in dieser Figur ersichtlich ist, dass ein zu biegendes Blech 3, welches auf eines oder mehrere der Module aufgelegt wird, seitliche Laschen 27 aufweisen kann, welche in den ersten Spalt 22 hineinragen können. Zum Einstellen der Spaltweite 36 des ersten Spaltes 22, kann vorgesehen sein, dass ein Zugmittel 44 ausgebildet ist, welches beispielsweise durch eine Antriebsrolle 45 und eine Umlenkrolle 46 gespannt ist und an welcher ein Mitnehmerelement 47 angeordnet ist, welches mit den einzelnen Auflagemodulen 17, 18, 23 gekoppelt werden kann, um diese verstellen zu können. Das Zugmittel 44 kann beispielsweise in Form eines Riementriebes ausgebildet sein. Insbesondere kann für das Zugmittel 44 ein Zahnriemen verwendet werden.

In der Fig. 9 ist eine weitere und gegebenenfalls für sich eigenständige Ausführungsform der Biegemaschine 1 gezeigt, wobei wiederum für gleiche Teile gleiche Bezugszeichen bzw. Bauteilbezeichnungen wie in den vorangegangenen Figuren 1 bis 8 verwendet werden. Um unnötige Wiederholungen zu vermeiden, wird auf die detaillierte Beschreibung in den vorangegangenen Figuren 1 bis 8 hingewiesen bzw. Bezug genommen.

Fig. 9 zeigt ein weiteres Ausführungsbeispiel des Aufbaus der Auflagevorrichtung 15, wobei wieder eine Ansicht entsprechend Fig. 8 gewählt wurde. Wie in Fig. 9 gut ersichtlich, kann vorgesehen sein, dass der Manipulator 33 in Form eines Mitnehmerelementes 47 ausgebildet ist, welches an der Auflagevorrichtung 15 geführt ist und in eine Zahnstange 48 eingreift, wodurch das Mitnehmerelement 47 in Längsrichtung 21 verschiebbar ist. Das Mitnehmerelement 47 ist hierbei wahlweise mit den einzelnen Auflagemodulen 17, 18, 23 koppelbar. Dadurch kann ähnlich dem Ausführungsbeispiel nach Fig. 8 die Spaltweite 36 des ersten Spaltes 22 verstellt werden.

Sowohl bei dem Ausführungsbeispiel nach Fig. 8 als auch bei dem Ausführungsbeispiel nach Fig. 9 vorgesehen sein, dass eines oder mehrere der Auflagemodule 17, 18, 23 eine Feststellbremse 49 aufweisen, mittels welcher dieser in ihrer Position fixiert werden können.

In der Fig. 10 ist eine weitere und gegebenenfalls für sich eigenständige Ausführungsform der Biegemaschine 1 gezeigt, wobei wiederum für gleiche Teile gleiche Bezugszeichen bzw. Bauteilbezeichnungen wie in den vorangegangenen Figuren 1 bis 9 verwendet werden. Um unnötige Wiederholungen zu vermeiden, wird auf die detaillierte Beschreibung in den vorangegangenen Figuren 1 bis 9 hingewiesen bzw. Bezug genommen.

In diesem Ausführungsbeispiel ist je Auflagemodul 17, 18, 23 ein Stellantrieb 50 vorgesehen, welcher zum Verstellen der Auflagemodule dient. Dadurch können die Auflagemodule 17, 18, 23 zeitgleich und unabhängig voneinander in Längsrichtung 21 verstellt werden.

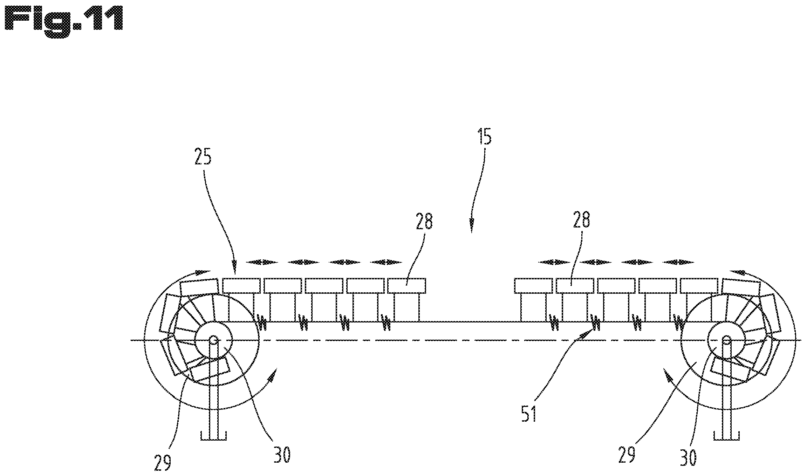

In der Fig. 11 ist eine weitere und gegebenenfalls für sich eigenständige Ausführungsform der Biegemaschine 1 gezeigt, wobei wiederum für gleiche Teile gleiche Bezugszeichen bzw. Bauteilbezeichnungen wie in den vorangegangenen Figuren 1 bis 10 verwendet werden. Um unnötige Wiederholungen zu vermeiden, wird auf die detaillierte Beschreibung in den vorangegangenen Figuren 1 bis 10 hingewiesen bzw. Bezug genommen.

In diesem Ausführungsbeispiel sind die einzelnen Segmente 28 des ersten Auflageelementes 24 bzw. des zweiten Auflageelementes 25 durch ein elastisches Koppelelement 51 miteinander gekoppelt. Das elastische Koppelelement 51 kann beispielsweise durch ein Gummielement ausgebildet sein.

Die Steuerung der Antriebseinheiten für die einzelnen Verfahrbewegungen zur Regulierung der Spaltweite 36 des ersten Spaltes 22 und/oder der Spaltweite 31 des zweiten Spaltes 26 kann durch eine Zentrale Rechnereinheit erfolgen, welche auch für die Steuerung des Biegevorganges der Biegemaschine 1 verwendet wird.

Die Ausführungsbeispiele zeigen mögliche Ausführungsvarianten der Biegemaschine 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren 1, 2, 3, 4, 5, 6, 7, 8, 9, 10 und 11 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der Biegemaschine 1 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Biegemaschine | 28 | Segment |
| 2 | Schwenkbiegemaschine | 29 | Speicherrolle |
| 3 | Blech | 30 | Aktor |
| 4 | Maschinengestell | 31 | Spaltweite zweiter Spalt |
| 5 | Klemmunterlage | 32 | Verbindungselement |
| 6 | Niederhalter | 33 | Manipulator |
| 7 | Auflagefläche der Klemmunterlage | 34 | Manipulatorarm |
| 8 | Führungsschienensystem | 35 | Kupplungselement |
| 9 | Vertikalrichtung | 36 | Spaltweite erster Spalt |
| 10 | Niederhalterfläche | 37 | Führungsschiene |
| 11 | Vorderseite | 38 | Führungsrollensystem |
| 12 | Niederhalterkante | 39 | Achszapfen |
| 13 | Biegewerkzeug | 40 | Antriebswelle |
| 14 | Rückseite | 41 | Drehantrieb |
| 15 | Auflagevorrichtung | 42 | Riementrieb |
| 16 | Auflagefläche der Auflagevorrichtung | 43 | Antriebseinheit |
| | | 44 | Zugmittel |
| 17 | erstes Auflagemodul | 45 | Antriebsrolle |
| 18 | zweites Auflagemodul | 46 | Umlenkrolle |
| 19 | Auflagefläche erstes Auflagemodul | 47 | Mitnehmerelement |
| | | 48 | Zahnstange |
| 20 | Auflagefläche zweites Auflagemodul | 49 | Feststellbremse |
| | | 50 | Stellantrieb |
| 21 | Längsrichtung | 51 | elastisches Koppelelement |
| 22 | erster Spalt | | |
| 23 | weiteres Auflagemodul | | |
| 24 | erstes Auflageelement | | |
| 25 | zweites Auflageelement | | |
| 26 | zweiter Spalt | | |
| 27 | Lasche | | |

## Patentansprüche

1. Biegemaschine (1) für Bleche (3), insbesondere Schwenkbiegemaschine (2), umfassend:
ein Maschinengestell (4);
eine Klemmunterlage (5), welche am Maschinengestell (4) angeordnet ist, wobei an der Klemmunterlage (5) eine Auflagefläche (7) ausgebildet ist an welcher das zu biegende Blech (3) für die Bearbeitung auflegbar ist;
einen Niederhalter (6), welcher vertikal verschiebbar am Maschinengestell (4) angeordnet ist und durch welchen in Zusammenwirkung mit der Klemmunterlage (5) das auf der Klemmunterlage (5) platziere Blech (3) fixierbar ist und welcher Niederhalter (6) an dessen Vorderseite (11) eine sich in Längsrichtung (21) der Biegemaschine (1) erstreckende Niederhalterkante (12) aufweist;
ein Biegewerkzeug (13), welches an einer Vorderseite (11) der Klemmunterlage (5) und des Niederhalters (6) angeordnet ist und durch welches ein zwischen Klemmunterlage (5) und Niederhalter (6) geklemmtes Blech (3) verformbar ist;
eine Auflagevorrichtung (15), welche zur Aufnahme des zu biegenden Bleches (3) ausgebildet ist, wobei eine Auflagefläche (16) der Auflagevorrichtung (15) in einer horizontalen Ebene mit der Auflagefläche (7) der Klemmunterlage (5) angeordnet ist,
**dadurch gekennzeichnet, dass**
die Auflagevorrichtung (15) zumindest ein erstes (17) und ein zweites Auflagemodul (18) mit einer ersten (19) und einer zweiten Auflagefläche (20) umfasst, wobei zumindest eines der Auflagemodule (17, 18) horizontal in Längsrichtung (21) der Biegemaschine (1) verschiebbar ist und dadurch ein im rechten Winkel zur Niederhalterkante (12) verlaufender erster Spalt (22) zwischen den beiden Auflagemodulen (17, 18) einstellbar ist, und dass die Auflagemodule (17, 18) jeweils zumindest einen erstes (24) und ein zweites Auflageelement (24, 25) mit einem zwischen den Auflageelementen (24, 25) liegenden zweiten Spalt (26) aufweisen, welcher zweite Spalt (26) parallel zur Niederhalterkante (12) ausgerichtet ist, wobei zumindest eines der Auflageelemente (24, 25) im rechten Winkel zur Niederhalterkante (12) verschiebbar ist, sodass der zweite Spalt (26) in dessen Größe und/oder Lage verstellbar ist.

2. Biegemaschine nach Anspruch 1, **dadurch gekennzeichnet, dass** zumindest eines der beiden Auflageelemente (24, 25) jeweils zusammenhängende und am Auflagemodul (17, 18) geführte Segmente (28) umfasst.

3. Biegemaschine nach Anspruch 1 oder 2, **dadurch gekennzeichnet, dass** je Auflagemodul (17, 18) zumindest ein Aktor (30), vorzugsweise elektromotorischer Antrieb, angeordnet ist, mittels welchem zumindest eines der an einem Auflagemodul (17, 18) angeordneten Auflageelemente (24, 25) verstellbar ist.

4. Biegemaschine nach einem der vorhergehenden Ansprüche, **dadurch gekennzeichnet, dass** je Auflagemodul (17, 18) zwei Aktoren (30), vorzugsweise elektromotorische Antriebe, angeordnet sind, mittels welchen das erste (24) und das zweite Auflageelement (25) unabhängig voneinander verstellbar sind.

5. Biegemaschine nach einem der vorhergehenden Ansprüche, **dadurch gekennzeichnet, dass** die Auflageelemente (24, 25), insbesondere die einzelnen Segmente (28), auf einer Speicherrolle (29) aufrollbar sind.

6. Biegemaschine nach Anspruch 5, **dadurch gekennzeichnet, dass** die Speicherrolle (29) mittels einem Riementrieb (42) mit einer Antriebseinheit (43) gekoppelt ist.

7. Biegemaschine nach Anspruch 5, **dadurch gekennzeichnet, dass** die Speicherrollen (29) von zumindest zwei der Auflagemodule (17, 18) drehbewegungsgekoppelt sind, wobei die Drehbewegung mittels einer sich in Längsrichtung (21) erstreckenden Antriebswelle (40) mit polygonem Querschnitt übertragen wird und wobei die Antriebswelle (40) mittels einem Drehantrieb (41) angetrieben wird und wobei die Speicherrollen (29) in Längsrichtung (21) der Antriebswelle (40) verschiebbar sind.

8. Biegemaschine nach einem der vorhergehenden Ansprüche, **dadurch gekennzeichnet, dass** die Auflagemodule (17, 18) mittels einem Manipulator (33) in Längsrichtung (21) der Biegemaschine (1) verschiebbar sind, wobei der Manipulator (33) ein Kupplungselement (35) zum bedarfsweisen koppeln mit den Auflagemodulen (17, 18) aufweist.

9. Biegemaschine nach Anspruch 8, **dadurch gekennzeichnet, dass** der Manipulator (33) einen Manipulatorarm (34) umfasst, welcher derart ausgebildet ist, dass der Manipulator (33) verschiedene Auflagemodule (17, 18) erreichen kann.

10. Biegemaschine nach Anspruch 8, **dadurch gekennzeichnet, dass** der Manipulator (33) ein Zugmittel (44) mit einem Mitnehmerelement (47) umfasst.

11. Biegemaschine nach einem der Ansprüche 1 bis 7, **dadurch gekennzeichnet, dass** jedes der Auflagemodule (17, 18) einen eigenen Stellantrieb (50) aufweist und durch diesen in Längsrichtung (21) der Biegemaschine (1) verschiebbar ist.

12. Biegemaschine nach einem der vorhergehenden Ansprüche, **dadurch gekennzeichnet, dass** je Auflagemodul (17, 18) eine Feststellbremse (49) ausgebildet ist, mittels welchem das Auflagemodul (17, 18) in seiner Position fixierbar ist.

13. Biegemaschine nach einem der Ansprüche 2 bis 12, **dadurch gekennzeichnet, dass** die einzelnen Segmente (28) der Auflageelemente (24, 25) durch ein elastisches Koppelelement (51) miteinander gekoppelt sind.

14. Biegemaschine nach einem der vorhergehenden Ansprüche, **dadurch gekennzeichnet, dass** die einzelnen Segmente (28) der Auflageelemente (24, 25) jeweils eine Rollenführung aufweisen durch welche sie in einem Auflagemodul (17, 18) geführt sind.

## Claims

1. A bending machine (1) for metal sheets (3), in particular a pivot bending machine (2), comprising:
a machine frame (4);
a clamping base (5), which is arranged on the machine frame (4), wherein on the clamping base (5) a support surface (7) is formed on which the metal sheet (3) to be bent can be placed for processing;
a blank-holder (6), which is arranged to be vertically displaceable on the machine frame (4) and by means of which in cooperation with the clamping base (5) the metal sheet (3) placed on the clamping base (5) can be fixed and which blank-holder (6) on its front side (11) has a blank-holder edge (12) extending in the longitudinal direction (21) of the bending machine (1);
a bending tool (13), which is arranged on a front side (11) of the clamping base (5) and the blank-holder (6) and by means of which a metal sheet (3) clamped between the clamping base (5) and blank-holder (6) can be shaped;
a support device (15), which is designed for supporting the metal sheet (3) to be bent, wherein a support surface (16) of the support device (15) is arranged in a horizontal plane with the support surface (7) of the clamping base (5),
**characterized in that**,
the support device (15) comprises at least one first (17) and one second support module (18) with a first (19) and a second support surface (20), wherein at least one of the support modules (17, 18) can be displaced horizontally in longitudinal direction (21) of the bending machine (1) and in this way a first gap (22) running at right angles to the blank-holder edge (12) can be adjusted between the two support modules (17, 18), and **in that** the support modules (17, 18) each have at least one first (24) and one second support element (24, 25) with a second gap (26) between the support elements (24, 25), which second gap (26) is aligned parallel to the blank-holder edge (12), wherein at least one of the support elements (24, 25) can be displaced at right angles to the blank-holder edge (12) so that the second gap (26) can be adjusted in size and/or position.

2. The bending machine as claimed in claim 1, **characterized in that**, at least one of the two support elements (24, 25) comprises connecting segments (28) guided on the support module (17, 18).

3. The bending machine as claimed in claim 1 or 2, **characterized in that**, for each support module (17, 18) at least one actuator (30), preferably an electric motor drive, is arranged, by means of which at least one of the support elements (24, 25) arranged on a support module (17, 18) can be adjusted.

4. The bending machine as claimed in any of the preceding claims, **characterized in that**, for each support module (17, 18) two actuators (30), preferably electric motor drives, are arranged by means of which the first (24) and the second support element (25) can be adjusted independently of one another.

5. The bending machine as claimed in any of the preceding claims, **characterized in that**, the support elements (24, 25), in particular the individual segments (28), can be rolled onto a storage roll (29).

6. The bending machine as claimed in claim 5, **characterized in that**, the storage roll (29) is coupled by means of a belt drive (42) to a drive unit (43).

7. The bending machine as claimed in claim 5, **characterized in that**, the storage rolls (29) are rotationally coupled by at least two of the support modules (17, 18), wherein the rotary movement is transmitted by means of a drive shaft (40) with a polygonal cross-section extending in longitudinal direction (21) and wherein the drive shaft (40) is driven by means of a rotary drive (41) and wherein the storage rolls (29) can be displaced in longitudinal direction (21) of the drive shaft (40).

8. The bending machine as claimed in any of the preceding claims, **characterized in that**, the support modules (17, 18) can be displaced by means of a manipulator (33) in longitudinal direction (21) of the bending machine (1), wherein the manipulator (33) has a coupling element (35) for possibly coupling to the support modules (17, 18).

9. The bending machine as claimed in claim 8, **characterized in that**, the manipulator (33) comprises a manipulator arm (34) which is designed such that the manipulator (33) can reach different support modules (17, 18).

10. The bending machine as claimed in claim 8, **characterized in that**, the manipulator (33) comprises a tensioning device (44) with a carrier element (47).

11. The bending machine as claimed in any of claims 1 to 7, **characterized in that**, each of the support modules (17, 18) has a separate actuator (50) and can be displaced by the latter in longitudinal direction (21) of the bending machine (1).

12. The bending machine as claimed in any of the preceding claims, **characterized in that**, for each support module (17, 18) there is an emergency brake (49), by means of which the support module (17, 18) can be fixed in position.

13. The bending machine as claimed in any of claims 2 to 12, **characterized in that**, the individual segments (28) of the support elements (24, 25) are coupled to one another by means of an elastic coupling element (51).

14. The bending machine as claimed in any of the preceding claims, **characterized in that**, the individual segments (28) of the support elements (24, 25) each have a roller guide by means of which they are guided in a support module (17, 18).

## Revendications

1. Machine de pliage (1) pour des tôles (3), plus particulièrement machine de pliage pivotante (2), comprenant :
un châssis de machine (4) ;
un support de serrage (5), qui est disposé sur le châssis de machine (4), moyennant quoi, sur le support de serrage (5), une surface d'appui (7) est réalisée, sur laquelle la tôle à plier (3) peut être posée pour l'usinage,
un serre-flan (6) qui est disposé de manière coulissante verticalement sur le châssis de machine (4) et grâce auquel, en interaction avec le support de serrage (5), la tôle (3) placée sur le support de serrage (5) peut être fixée et ce serre-flan (6) comprenant, sur son côté avant (11), une arête de serre-flan (12) s'étendant dans la direction longitudinale (21) de la machine de pliage (1) ;
un outil de pliage (13), qui est disposé sur un côté avant (11) du support de serrage (5) et du serre-flan (6) et grâce auquel une tôle (3) serrée entre le support de serrage (5) et le serre-flan (6) peut être déformée ;
un dispositif d'appui (15) qui est conçu pour le logement de la tôle à plier (3), une surface d'appui (16) du dispositif d'appui (15) étant disposée dans un plan horizontal avec la surface d'appui (7) du support de serrage (5),
**caractérisée en ce que**
le dispositif d'appui (15) comprend au moins un premier (17) et un deuxième module d'appui (18) avec une première (19) et une deuxième surface d'appui (20), au moins un des modules d'appui (17, 18) étant coulissant horizontalement dans la direction longitudinale (21) de la machine de pliage (1) et un premier interstice (22) s'étendant à angle droit par rapport à l'arête de serre-flan (12) entre les deux modules d'appui (17, 18) pouvant être réglé, et **en ce que** les modules d'appui (17, 18) comprennent chacun un premier (24) et un deuxième élément d'appui (24, 25) avec un deuxième interstice (26) se trouvant entre les éléments d'appui (24, 25), ce deuxième interstice (26) étant orienté parallèlement à l'arête de serre-flan (12), au moins un des éléments d'appui (24, 25) coulissant à angle droit par rapport à l'arête de serre-flan (12), de façon à ce que le deuxième interstice (26) puisse être réglé en ce qui concerne sa taille et/ou sa position.

2. Machine de pliage selon la revendication 1, **caractérisée en ce qu'**au moins un des deux éléments d'appui (24, 25) comprend des segments (28) interdépendants et guidés sur le module d'appui (17, 18).

3. Machine de pliage selon la revendication 1 ou 2, **caractérisée en ce que**, au niveau de chaque module d'appui (17, 18), est disposé au moins un actionneur (30), d préférence un entraînement à moteur électrique, au moyen duquel au moins un des éléments d'appui (24, 25) disposés sur un module d'appui (17, 18) peut être réglé.

4. Machine de pliage selon l'une des revendications précédentes, **caractérisée en ce que**, au niveau de chaque module d'appui (17, 18) sont disposés deux actionneurs (30) de préférence des entraînements à moteurs électriques, au moyen desquels le premier (24) et le deuxième élément d'appui (25) peuvent être réglés indépendamment.

5. Machine de pliage selon l'une des revendications précédentes, **caractérisée en ce que** les éléments d'appui (24, 25), plus particulièrement les différents segments (28), peuvent être enroulés sur un rouleau de réserve (29).

6. Machine de pliage selon la revendication 5, **caractérisée en ce que** le rouleau de réserve (29) est couplé au moyen d'une transmission par courroie (42) avec une unité d'entraînement (43).

7. Machine de pliage selon la revendication 5, **caractérisée en ce que** les rouleaux de réserve (29) sont couplés en rotation par au moins deux des modules d'appui (17, 18), le mouvement de rotation étant transmis au moyen d'un arbre d'entraînement (40) à section polygonale s'étendant dans la direction longitudinale (21) et l'arbre d'entraînement (40) étant entraîné au moyen d'un entraînement rotatif (41) et les rouleaux de réserve (29) coulissant dans la direction longitudinale (21) de l'arbre d'entraînement (40).

8. Machine de pliage selon l'une des revendications précédentes, **caractérisée en ce que** les modules d'appui (17, 18) coulissent au moyen d'un manipulateur (33) dans la direction longitudinale (21) de la machine de pliage (1), le manipulateur (33) comprenant un élément de couplage (35) pour le couplage, si nécessaire, avec les modules d'appui (17, 18).

9. Machine de pliage selon la revendication 8, **caractérisée en ce que** le manipulateur (33) comprend un bras de manipulateur (34) qui est conçu de façon à ce que le manipulateur (33) puisse atteindre différentes modules d'appui (17 18).

10. Machine de pliage selon la revendication 8, **caractérisée en ce que** le manipulateur (33) comprend un moyen de traction (44) avec un élément d'entraînement (47).

11. Machine de pliage selon l'une des revendications 1 à 7, **caractérisée en ce que** chacun des modules d'appui (17, 18) comprend son propre entraînement de réglage (50) et coulisse grâce à celui-ci dans la direction longitudinale (21) de la machine de pliage (1).

12. Machine de pliage selon l'une des revendications précédentes, **caractérisée en ce que**, au niveau de chaque module d'appui (17, 18), est disposé un frein de stationnement (49) au moyen duquel le module d'appui (17, 18) peut être fixé dans sa position.

13. Machine de pliage selon l'une des revendications 2 à 12, **caractérisée en ce que** les différents segments (28) des éléments d'appui (24, 25) sont couplés entre eux à l'aide d'un élément de couplage élastique (51).

14. Machine de pliage selon l'une des revendications précédentes, **caractérisée en ce que** les différents segments (28) des éléments d'appui (24, 25) comprennent chacun un guidage de rouleaux à l'aide duquel ils sont guidés dans un module d'appui (17, 18).
